Europäisches Patentamt

European Patent Office

Office européen des brevets

(11) Publication number: **0 184 103**
**B1**

(12) **EUROPEAN PATENT SPECIFICATION**

(45) Date of publication of patent specification: **07.02.90**

(21) Application number: **85114941.9**

(22) Date of filing: **26.11.85**

(51) Int. Cl.⁵: **F 02 B 67/04,** F 16 H 15/50, F 16 N 7/02

(54) **Accessory drive device in engine.**

(30) Priority: **30.11.84 JP 182909/84**

(43) Date of publication of application:
**11.06.86 Bulletin 86/24**

(45) Publication of the grant of the patent:
**07.02.90 Bulletin 90/06**

(84) Designated Contracting States:
**DE FR GB**

(56) References cited:
**FR-A-1 111 217**
**GB-A-2 091 357**
**NL-C- 64 299**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Kaneyuki, Kazutoshi c/o MITSUBISHI DENKI K.K.**
**Himeji Works 840, Chiyodacho Himeji-shi**
**Hyogo (JP)**

(74) Representative: **Eisenführ & Speiser**
**Martinistrasse 24**
**D-2800 Bremen 1 (DE)**

Courier Press, Leamington Spa, England.

## Description

The invention relates to an accessory driving device for driving, for instance, an alternator, a cooling water pump, an air-conditioning compressor, utilizing power taken from an output shaft of an engine.

In an engine of an automobile or the like, accessories such as an alternator, a cooling water pump, an air-conditioning compressor, an oil pump for hydraulic servo steering or the like are belt-driven by a crank pulley installed at an end of a crank shaft. Since the accessory drive is accompanied with large power loss during the high speed running of the engine, various methods have been proposed to limit the running speed of the accessory by changing the transmission ratio between the engine and the pulley.

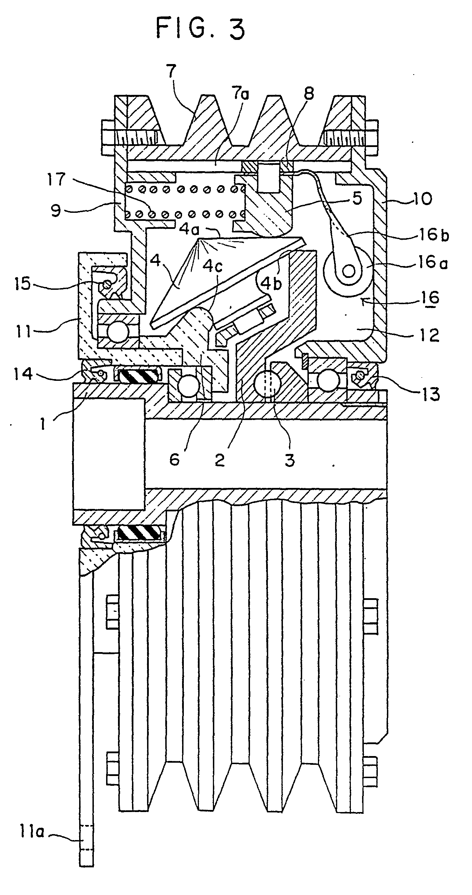

In Fig. 3 a proposal for an accessory drive device is shown having such speed limiting function. Numeral 1 designates an input shaft directly coupled to a crank shaft of an engine (not shown), numeral 2 an input transmission member on the input shaft, and numeral 3 a cam device for generating pressure interposed between the input shaft 1 and the input transmission member 2. Numeral 4 designates a plurality of planetary cones, each composed of a frictional transmission surface 4a on a conical surface, a frictional transmission surface 4b on a bottom surface of the cone, and a frictional transmission surface 4c on a circumferential surface of a cone axial line. Numeral 5 designates a shifting ring which is engaged in frictional engagement with the frictional transmission surface 4a of the planetary cone 4 and moved in the axial direction so as to vary the frictional transmission radius of the planetary cone 4. Numeral 6 is a non-rotating orbit ring which is engaged in frictional engagement with the frictional transmission surface 4c of the planetary cone 4 and guides the revolution of the planetary cone 4 around the axis of the input shaft 1. Numeral 7 designates an accessory drive pulley, numeral 7a a plurality of key grooves on the inner circumferential surface of the pulley 7 in the axial direction, and numeral 8 a roller key which transmits the rotational force of the shifting ring 5 to the pulley 7, allows the movement in the axial direction and is engaged with the groove 7a. Numerals 9, 10 designate side plates to support the pulley 7 at both ends. Numeral 11 designates a stationary member which fixedly supports the orbit ring 6 and is fixed at a mounting part 11a to the stationary member of an engine (not shown). Numeral 12 designates frictional transmission oil which acts as a medium for the frictional transmission and is filled in the space enclosed by the pulley 7, the side plates 9, 10 and the input shaft 1 and sealed by oil seals 13, 14, 15.

Numeral 16 designates a centrifugal governor comprising a centrifugal weight 16a and a spring plate 16b which supports the centrifugal weight and connects it to the shifting ring 5, and numeral 17 a return spring.

Operation of the accessory drive device will be described. The rotational force of the crank shaft of the engine is transmitted to the input shaft 1, and then to the input transmission member 2 through the cam device 3. The planetary cone 4 performs self-rotation about its own axis, and at the same time performs the revolution around the axis of the input shaft 1 along the frictional transmission surface of the orbit ring 6 which is stationary. The shifting ring 5 engaged in frictional engagement with the frictional transmission surface 4a of the planetary cone 4 is rotated around the axis of the input shaft 1 on the basis of the differential action between the self-rotation and the revolution of the planetary cone 4 and the transmission radius ratio, and drives the pulley 7 through the roller key 8. The rotational speed ratio between the input shaft 1 and the gear shifting ring 5 can be arbitrarily set by moving the shifting ring 5 in the axial direction so that the effective radius ratio of the frictional transmission between the input shaft 1 and the shifting ring 5 is varied. For example, if the shifting ring 5 is engaged in frictional engagement at large diameter side of the planetary cone member 4, the rotational speed ratio becomes 1:1, and at small diameter side, i.e., near the vertex of the cone, the rotational speed ratio becomes 1:0.4, thus reduction at the shifting ring 5 be infinitely varied. The centrifugal governor 16 controls the axial position of the shifting ring 5, and automatically controls the rotational speed of the pulley 7 to the speed ratio 1:1 at low speed state of the engine and to the nearly constant rotational speed when the engine is at intermediate or high speed state. The frictional transmission oil 12 is interposed in the frictional transmission surface and acts as medium for the frictional transmission force and perform lubrication and cooling in the contacting surface and the bearing.

In the accessory drive device utilizing the continously variable transmission with the planetary mechanism of frictional transmission type as above described, the frictional transmission oil infused in the device and a small number of air bubbles may be exposed by heating during running and generate large pressure within the enclosed space. In this case, since the oil seals 13, 14, 15 cannot endure the pressure and may produce oil leakage, special measures to withstand high pressure must be taken. As a result, the device becomes of large size and high cost, and the seal for high pressure usually produces large sliding loss and may deteriorate the transmission efficiency of the device.

From GB—A—2 091 357 an automotive accessory drive having a planetary gear is known for reducing the driving speed of an accessory at high engine speeds by using three different transmission ratios of a planetary gear, which are selected according to the engine speed. Such a three-step-transmission, however, has the disadvantage that during changeover between the different transmission ratios, instability of the engine speed occurs due to the changed load during transmission shifting.

From US—A—2 836 994 (=FR—A—1 111 217) a planetary cone friction transmission system having an infinitely variable transmission ratio is known, which transmission system is intended as a main drive, i.e. for driving a load at infinitely variable speeds from an engine having substantially constant speed. The known transmission system comprises support means; a driven member supported for rotation about its axis by said support means; a deformable friction ring coaxial with said driven member and operatively connected to the latter for transmitting a drive thereto when said friction ring rotates about its axis; a plurality of conical planetary rollers distributed about the axis of said driven member, and being surrounded by and engaging said friction ring; a plurality of bearing means respectively supporting said planetary rollers for respective free rotation about their axes and for respective free movement along their axes under the action of centrifugal force so that when said planetary rollers rotate about the axis of said driven member they will press against said friction ring due to the centrifugal force acting on said rollers; a drive shaft coaxial with said driven shaft and also supported for rotation about its axis by said support means; and turning means cooperating with said drive shaft and said rollers for turning the latter respectively about their axes and simultaneously about the drive shaft axis when said drive shaft rotates, so that the drive from said drive shaft will be transmitted through said rollers to said friction ring and from the latter to said driven member.

It is an object of the present invention to provide an accessory drive using a suitable frictional transmission system having only a comparatively small size so that it can be integrated into the output member of an accessory drive. It is particularly an object of the invention to avoid problems with the expansion of frictional transmission oil contained in such a transmission system by heating during running, which problems particularly develop due to the small size of such a system.

According to the invention the accessory driving device is structured as defined in claim 1.

In a preferred embodiment of the invention, the pressure adjusting device comprises a container with a suitable number of bleed holes, and the container communicates to the annular chamber through a pipe at position lower than the liquid level of the frictional transmission oil in the container.

In another aspect of the invention, the pressure adjusting device includes a dish shaped member fixed to a stationary member supporting the input shaft, forming the chamber between the stationery member and the above-mentioned member, and the stationary member being preferably connected to the annular chamber through a communicating hole formed in the stationary member.

Brief description of the drawings

Fig. 1 is a side view of an accessory drive device of an engine according to the invention, partly cut away to reveal the inside thereof;

Fig. 2 is a side view of another accessory drive device of an engine according to the invention, partly cut away to reveal the inside thereof; and

Fig. 3 is a side view, partly cut away, of a conventional accessory drive device of an engine of an internal prior art (not pre-published).

Detailed description of the preferred embodiments

An embodiment of the invention will now be described referring to the accompanying drawings.

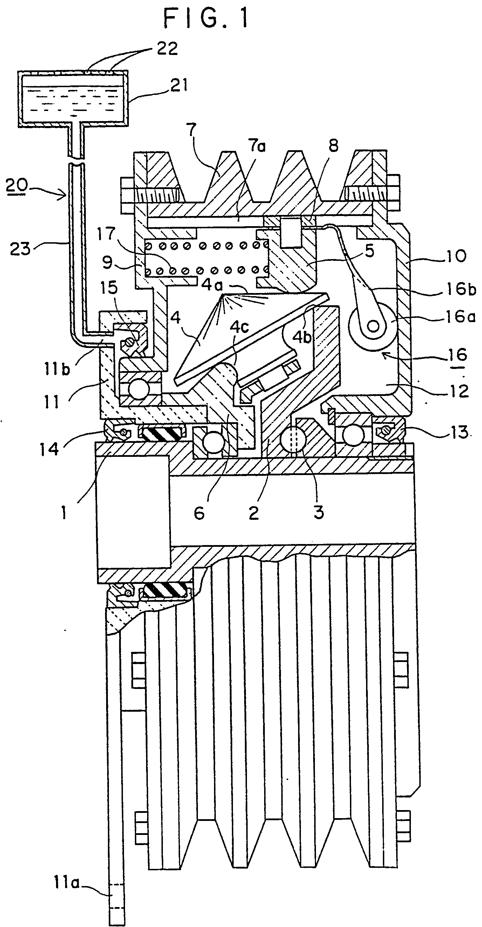

In Fig. 1, reference numeral 1 designates an input shaft, numeral 2 an input transmission member on the input shaft, and numeral 3 a cam device for generating pressure interposed between the input shaft 1 and the input transmission member 2. Numeral 4 designates a plurality of planetary cones, each composed of a frictional transmission surface 4a on a conical surface, a frictional transmission surface 4b on a bottom surface of the cone, and a frictional transmission surface 4c on a circumferential surface of the cone axial center. Numeral 5 designates a shifting ring which is engaged in frictional engagement with the frictional transmission surface 4a of the planetary cone 4 and can move in the axial direction so as to vary the frictional transmission ratio, and numeral 6 an orbit ring which guides the revolution of the planetary cone 4 around the axial line of the input shaft 1. Numeral 7 designates an accessory drive pulley, numeral 7a a plurality of key grooves on the inner circumferential surface of the pulley 7 in the axial direction, and numeral 8 a roller key which transmits the rotational force of the shifting ring 5 to the pulley 7 by an engagement with the key groove 7a. Numeral 11 designates a stationary member which is fixed at a mounting part 11a to the stationary member of the engine (not shown). Numeral 12 designates a chamber filled with a frictional transmission oil acting as medium for the frictional transmission, numerals 13, 14, 15 oil seals to seal the chamber 12 in the liquid tight manner, numeral 16 a centrifugal governor comprising a centrifugal weight 16a and a spring plate 16b, a numeral 17 a return spring. The construction and function of these elements are shown in Fig. 3 and substantially the same as that used in the device of the internal prior art, and the detailed description shall be omitted here.

A pressure adjusting device designated by numeral 20 includes a container 21 of cylindrical shape, for example. The container 21 which has a plurality of bleed holes 22 on the top wall thereof, communicates at the bottom wall through a pipe 23 and a communication hole 11b provided in the stationary member 11 to the chamber with the friction oil 12. The container 21 is installed at a level so that its upper part is higher than the upper part of the chamber with the friction oil 12.

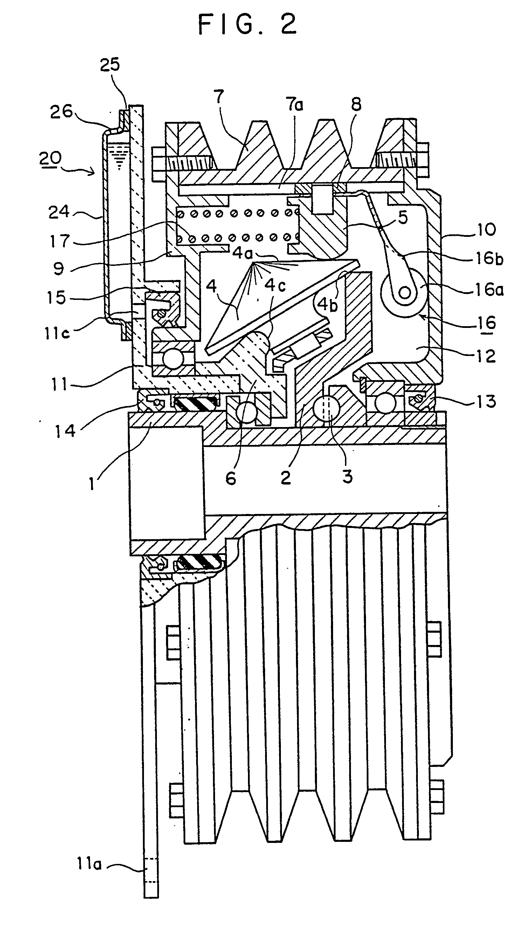

In another embodiment, as shown in Fig. 2, a pressure adjusting device 20 includes a dish-shaped wall member 24 which is firmly fixed to the side surface of the stationary member 11 through a packing 25, thereby forming a chamber to enclose the frictional transmission oil. This chamber has the top end higher than that of the annular chamber with the friction oil 12, and communicates to the atmosphere through bleed holes 26 formed in the member 24 and also to the annular chamber with the friction oil 12 through the communicating hole 11c.

In above-mentioned construction, even if the frictional transmission oil and a small number of bubbles contained in the oil are expanded by heat during the running, the pressure adjusting device 20 absorbs the volume variation through the communication hole 11b or 11c, thereby the pressure of the frictional transmission oil 12 in the annular chamber is maintained substantially at an atmospheric pressure. On the other hand, at non-running state of the device, the frictional transmission oil is returned from the pressure adjusting device 20 to the annular chamber with the friction oil 12 so that liquid level in the pressure adjusting device 20 and that in the annular chamber are in equilibrium to each other, thereby the original equilibrium is held.

According to the invention as above described, the pressure adjusting device having bleed holes is connected to the frictional transmission oil chamber of the accessory drive device utilizing the continuously variable transmission with planetary mechanism of frictional transmission type, so that the liquid level is kept higher than that of the chamber. As a result, even if the frictional transmission oil and bubbles are expanded by heat during the running, the pressure in the annular chamber is kept constant, thereby a high pressure oil seal of high cost and large size is not needed. Also, the sliding loss of the oil seal is decreased and therefore the transmission efficiency of the accessory drive device becomes high.

**Claims**

1. An accessory driving device for driving, for instance, an alternator, a cooling water pump, an air-conditioning compressor, utilizing power taken from an output shaft of an engine, said device comprising:
an input shaft (1) rotatably supported on a stationary support member (11) and driven by said engine output shaft and rotated at the same rotational speed;
a transmission output member (7) rotatably supported on said input shaft (1) and transmitting the power to said accessory;
planetary cone members (4) rotatably mounted around said input shaft (1) and in self-rotation around an axis inclined with respect to the axis of the input shaft (1), each of said planetary cone members (4) having a first part with a surface of nearly conical shape coaxial to the inclined axis and with a bottom surface radial to the inclined axis, and a second part in the form of a shaft with a circumferential surface coaxial to the inclined axis and connected with the bottom surface of the first part, and first, second and third frictional transmission surfaces (4a, 4b, 4c) being formed on the conical surface of the first part, the bottom surface of the first part and the circumferential surface of the second part, respectively;
an input transmission member (2) installed on and rotatable with said input shaft (1) and being with its outer circular periphery in frictional engagement with the second frictional transmission surface (4b) of said planetary cone members (4);
said stationary support member (11) having a part of nearly cylindrical shape with a center hole through which said input shaft (1) passes and being arranged in coaxial relation to said input shaft (1);
an orbit ring (6) fixedly supported to said stationary support member (11), said orbit ring (6) provided in the revolution path of said planetary cone members (4) and having an annular frictional engaging surface to be engaged in frictional engagement with the third frictional transmission surface (4c) of said planetary cone members (4);
a shifting ring (5) supported on said transmission output member (7) and movable only in the axial direction thereof and having a frictional engaging surface engaged in frictional engagement with the first frictional transmission surface (4a) of said planetary cone members (4) always within the movable region in the axial direction;
a transmission ratio varying member (16) varying the position of said shifting ring (5) in a direction to get near or away with respect to the rotation centers of said planetary cone members (4) in response to the rotational speed of said transmission output member (7) and suppressing the rise of the rotational speed of said transmission output member (7) in the range of the rotational speed of said input shaft (1) larger than a prescribed value;
said transmission output member (7) having two end plate members (9, 10) positioned on both ends thereof, said transmission output member (7) with the end plate members (9, 10) together with said input shaft (1) constituting an enclosed annular chamber filled with an amount of frictional transmission oil (12), and
a pressure adjusting device (20) for adjusting the pressure of the frictional transmission oil (12) in said annular chamber, said pressure adjusting device (20) comprising a chamber and being connected to the annular chamber and to the atmosphere through bleed holes (22), the level of the top end of said chamber of the pressure adjusting device (20) being set higher than that of the top end of the annular chamber.

2. A device as set forth in claim 1, wherein said pressure adjusting device (20) comprises a container (21) leading to the annular chamber through a pipe (23).

3. A device as set forth in claim 1, wherein said pressure adjusting device (20) comprises a dish-shaped member (24) installed on the stationary member (11), and said chamber is formed between the stationary member (11) and said dish-shaped member (24).

4. A device as set forth in claim 2 or claim 3, wherein the annular chamber and said chamber of the pressure adjusting device (20) leads to each other through a communicating hole (11c) formed in the stationary support member (11).

## Patentansprüche

1. Hilfsantriebsvorrichtung zum Antreiben eines Hilfsaggregats, z.B. eines Wechselstromgenerators, einer Kühlwasserpumpe, und/oder eines Klimaanlagen-Kompressors, mittels Antriebsleistung von der Ausgangswelle eines Motors;

mit einer an einem stationären Teil (11) drehbar gelagerten Eingangswelle (1), die durch die Ausgangswelle des Motors mit gleicher Drehzahl angetrieben wird;

mit einem Getriebeausgangsteil (7), das drehbar auf der Eingangswelle (1) gelagert ist und Leistung an das Hilfsaggregat überträgt;

mit Planetenkegelrädern (4), die drehbar um die Eingangswelle (1) und in Selbstdrehung um eine gegenüber der Achse der Eingangswelle (1) geneigten Achse angeordnet sind, wobei jedes der Planetenkegelräder (4) einen ersten Bereich mit einer etwa konischen Fläche koaxial zu der geneigten Achse und mit einer Bodenfläche radial zu der geneigten Achse, einen zweiten Bereich in der Form einer Welle mit einer zur geneigten Achse koaxialen Umfangsfläche, die mit der Bodenfläche des ersten Bereiches verbunden ist, sowie eine erste, eine zweite und eine dritte Reibungsübertragungsfläche (4a, 4b, 4c) auf der konischen Fläche des ersten Bereiches, auf der Bodenfläche des ersten Bereiches bzw. auf der Umfangsfläche des zweiten Bereiches aufweist;

mit einem Eingangsgetriebeglied (2), das auf der Eingangswelle (1) drehbar gelagert ist und mit seinem äußeren Umfang reibungsschlüssig an der zweiten Reibungsübertragungsfläche (4b) der Planetenkegelräder (4) angreift;

wobei das stationäre Teil (11) ein Teil mit etwa zylindrischer Form und einer Zentralbohrung aufweist, durch die die Eingangswelle (1) hindurchgeführt ist und die koaxial zur Eingangswelle (1) angeordnet ist;

mit einem Orbitring (6), der an dem stationären Stützring (11) befestigt und im Umlaufpfad der Planetenkegelräder (4) angeordnet ist, und der eine ringförmige Reibungsangriffsfläche hat, die reibungsschlüssig an der dritten Reibungsübertragungsfläche (4c) der Planetenkegelräder angreift;

mit einem Verstellring (5), der auf dem Getriebeausgangsteil (7) gelagert ist, nur in dessen Axialrichtung beweglich ist und eine Reibungsangriffsfläche hat, die reibungsschlüssig an der ersten Reibungsübertragungsfläche (4a) der Planetenkegelräder (4) innerhalb des axialen Bewegungsbereiches angreift;

mit einem Übersetzungsverhältnis-Verstellglied (16), das die Position des Verstellringes (5) in Richtung auf die Rotationszentren der Planetenkegelräder (4) und von diesen fort abhängig von der Drehzahl des Getriebeausgangsteils (7) verstellt und einem Anstieg der Drehzahl des Getriebeausgangsteils (7) entgegenwirkt, wenn im Drehzahlbereich der Eingangswelle (1) ein vorbestimmter Wert überschritten wird;

wobei das Getriebeausgangsteil (7) an beiden Enden mit Endplatten (9, 10) versehen ist und zusammen mit diesen und der Eingangswelle (1) einen geschlossenen Ringraum bildet, der mit Reibungsgetriebeöl (12) gefüllt ist; und

mit einer Druckeinstelleinrichtung (20) zum Einstellen des Druckes des Reibungsgetriebeöls (12) in dem Ringraum, wobei diese Druckeinstelleinrichtung (20) aus einer Kammer besteht, die mit dem Ringraum verbunden ist und die mit der Atmosphäre über Lüftungslöcher (22) in Verbindung steht, und wobei das obere Ehde der Kammer der Druckeinstelleinrichtung (20) höher angeordnet ist als das obere Ende des Ringraumes.

2. Hilfsantriebsvorrichtung nach Anspruch 1, dadurch gekennzeichnet, daß die Druckeinstelleinrichtung (20) einen Behälter (21) aufweist, der über ein Rohr (23) mit dem Ringraum verbunden ist.

3. Hilfsantriebsvorrichtung nach Anspruch 1, dadurch gekennzeichnet, daß die Druckeinstelleinrichtung (20) ein schlüsselförmiges Teil (24) aufweist, das an dem stationären Teil (11) angeordnet ist, und daß die Kammer zwischen dem stationären Teil (11) und dem schlüsselförmigen Teil (24) gebildet ist.

4. Hilfsantriebsvorrichtung nach Anspruch 1 oder 3, dadurch gekennzeichnet, daß der Ringraum und die Kammer der Druckeinstelleinrichtung (20) über eine Kommunikationsöffnung (11c) in dem stationären Stützteil (11) miteinander in Verbindung stehen.

## Revendications

1. Dispositif d'entraînement d'organe auxiliaire destiné à entraîner, par exemple, un alternateur, une pompe à eau de refroidissement, un compresseur de conditionnement d'air, en utilisant une énergie tirée d'un arbre secondaire d'un moteur à combustion interne, ledit dispositif comportant:

— un arbre primaire (1) monté rotatif sur un élément d'appui fixe (11) et entraîné par ledit arbre secondaire du moteur à combustion interne pour tourner à la même vitesse de rotation;

— un élément de transmission secondaire (7) monté rotatif sur ledit arbre primaire (1) et qui transmet l'énergie audit organe auxiliaire;

— des éléments formant cônes planétaires (4) montés rotatifs autour dudit arbre primaire (1) et en rotation sur eux-mêmes autour d'un axe incliné par rapport à l'axe de l'arbre primaire (1), chacun desdits éléments formant cônes planétaires (4) possédant une première partie qui présente une surface de forme à peu près conique, coaxiale avec l'axe incliné et une surface inférieure radiale par rapport à l'axe incliné, et une seconde partie sous la forme d'un arbre qui possède une surface circonférentielle coaxiale avec l'axe incliné et reliée à la surface inférieure de la première partie, des première, seconde et troisième surfaces de transmission à frottement (4a, 4b, 4c) étant respectivement définies sur la surface conique de la première partie, sur la surface inférieure de cette dernière et sur la surface circonférentielle de la seconde partie;

— un élément de transmission primaire (2) monté sur ledit arbre primaire (1) et apte à tourner conjointement avec celui-ci, tout en étant, par sa périphérie circulaire extérieure, en contact à frottement avec la seconde surface de transmission à frottement (4b) desdits éléments formant cônes planétaires (4);

— ledit élément d'appui fixe (11) possédant une partie de forme à peu près cylindrique pourvue d'un trou central à travers lequel passe ledit arbre primaire (1), et étant disposé dans une relation coaxiale avec ledit arbre primaire (1);

— une couronne orbitale (6) montée fixe sur ledit élément d'appui fixe (11), laquelle couronne orbitale (6) est prévue dans la trajectoire de révolution desdits éléments formant cônes planétaires (4) et présente une surface de contact à frottement annulaire destinée à être en contact à frottement avec la troisième surface de transmission à frottement (4c) desdits éléments formant cônes planétaires (4);

— un anneau de déplacement (5) monté sur ledit élément de transmission secondaire (7) en étant mobile uniquement dans la direction axiale de celui-ci, et qui présente une surface de contact à frottement en contact à frottement avec la première surface de transmission à frottement (4a) desdits éléments formant cônes planétaires (4), et ce, toujours dans les limites de la zone mobile dans la direction axiale;

— un élément variateur de rapport de transmission (16) qui fait varier la position dudit anneau de déplacement (5) dans une direction propre à le rapprocher ou à l'éloigner par rapport aux centres de rotation desdits éléments formant cônes planétaires (4), en réponse à la vitesse de rotation dudit élément de transmission secondaire (7), et qui supprime l'augmentation de la vitesse de rotation dudit élément de transmission secondaire (7) dans la plage de la vitesse de rotation dudit arbre primaire (1) supérieure à une valeur prescrite;

— ledit élément de transmission secondaire (7) comportant deux organes formant plaques d'extrémité (9, 10) placés sur ses deux extrémités, et cet élément de transmission secondaire (7) pourvu des organes formant plaques d'extrémité (9, 10) formant, conjointement avec ledit arbre primaire (1), une chambre annulaire fermée remplie d'une certaine quantité d'huile de transmission à frottement (12); et

— un dispositif de réglage de pression (20) destiné à régler la pression de l'huile de transmission à frottement (12) contenue dans ladite chambre annulaire, lequel dispositif de réglage de pression (20) comporte une chambre et est relié à la chambre annulaire et à l'atmosphère par l'intermédiaire de trous de purge (22), le niveau de l'extrémité supérieure de ladite chambre du dispositif de réglage de pression (20) étant fixé plus haut que celui de l'extrémité supérieure de la chambre annulaire.

2. Dispositif tel que défini dans la revendication 1, dans lequel ledit dispositif de réglage de pression (20) comporte un récipient (21) qui mène à la chambre annulaire par l'intermédiaire d'un tuyau (23).

3. Dispositif tel que défini dans la revendication 1, dans lequel ledit dispositif de réglage de pression (20) comporte un élément en forme de cuvette (24) monté sur l'élément fixe (11), ladite chambre étant définie entre l'élément fixe (11) et ledit élément en forme de cuvette (24).

4. Dispositif tel que défini dans la revendication 2 ou la revendication 3, dans lequel la chambre annulaire et ladite chambre du dispositif de réglage de pression (20) mènent l'une à l'autre par l'intermédiaire d'un trou de communication (11c) ménagé dans l'élément d'appui fixe (11).

# FIG. 1

FIG. 2

# FIG. 3